# EUROPEAN PATENT APPLICATION

(11) **EP 3 835 779 A1**
(43) Date of publication of application: **16.06.2021**
(21) Application number: 20774473.1
(22) Date of filing: 21.02.2020
(51) Int. Cl.: G01N 29/04, B22D 41/50, B22D 46/00, G06Q 50/10

(54) **STEELMAKING-CONTINUOUS CASTING PROCESS EQUIPMENT CONTROL AND STATE ANALYSIS METHOD USING LASER VIBRATION MEASUREMENT, AND SYSTEM USING SAME**

(30) Priority: 21.03.2019 KR 20190032180; 24.06.2019 KR 20190075170
(71) Applicant: Chosun Refractories Co., Ltd., Gwangyang-si, Jeollanam-do 57816 (KR)
(72) Inventor: JUNG, Jae Il, Pohang-si, Gyeongsangbuk-do 37667 (KR); SONG, Min Gyu, Seongnam-si, Gyeonggi-do 13581 (KR); LEE, Hyoung Gon, Pohang-si, Gyeongsangbuk-do 37689 (KR); KIM, You Na, Pohang-si, Gyeongsangbuk-do 37836 (KR)
(74) Representative: BCKIP
(86) International application number: PCT/KR2020/002558
(87) International publication number: WO 2020/189904

(57) **Abstract**

A state analysis method for steelmaking-continuous casting equipment, according to the present invention, comprises the steps of: measuring vibration data about steelmaking-continuous casting equipment by using a laser vibration measuring instrument; transmitting the measured vibration data; comparing the received measured vibration data with preset data and analyzing same; storing and learning the data; and displaying the compared and analyzed data, wherein: the measured data determines an abnormality in equipment or in a process through a case-specific correlation analysis or a preset defect diagnosis algorithm according to each situational condition and a use state; an alarm or a control signal is transmitted as necessary; and the data is stored in a database (DB), and is stored and utilized as big data by using data mining, machine learning, or deep learning technology, and the compared and analyzed data is displayed to a user so that the user can monitor and diagnose the state of the steelmaking-continuous casting equipment in real time.

## Description

### [Technical Field]

The present invention relates to a system and a method for analyzing equipment state in a steelmaking-continuous casting process, and more particularly, to a system and a method for analyzing equipment state in a steelmaking-continuous casting process, which can measure, diagnose and analyze vibration of equipment for a steelmaking-continuous casting process, such as an immersion nozzle or a shroud nozzle, using laser, and can store the measured and analyzed data in a database (DB) and inform a user of necessary data using deep learning, machine learning, or data mining technology, so that the user can monitor and predict the state of the steelmaking-continuous casting equipment in real time.

### [Background Art]

A continuous casting process means a process of continuously manufacturing a metal cast slab, such as a bloom, a billet, or a slab. A shroud nozzle is used for preventing reoxidation by air contact at the time of casting molten steel between tundishes in a ladle. The shroud nozzle is separated by a manipulator arm and reassembled whenever the ladle is replaced with a new one.

Molten steel moves to the tundish through the shroud nozzle in the ladle, and is injected into a mold through an immersion nozzle. Movement and initial coagulation of the molten steel induced into the mold is one of elements to determine the quality of the finished metal cast slab.

However, in case that there is an abnormal assembly in the nozzle separation-reassembly process of the shroud nozzle, a local drop impact is concentrated on the inner wall of the inclined nozzle, so it causes cracks and damages or deteriorates the quality of the cast slab since outdoor air is introduced into the nozzle.

Twisting in verticality of the nozzle may act as a risk factor of accidents in the continuous casting process, but now there are no proper measures. Moreover, slag which floats due to a difference in specific gravity inside the ladle causes vortex by deflecting force at the end of casting and flows into the tundish. Because it has a bad influence on cleanliness of steel, it is necessary to measure the time that slag flows into the shroud nozzle to shut off a sliding gate valve.

There are two kinds of slag induction sensing technology: one being a method of measuring slag inflow time through a change in electromagnetic field using slag inflow and the property that electrical conductivity of steel passing the shroud nozzle; and the other being a method of sensing vortex vibration generated at the time of slag inflow by attaching a n acceleration vibration sensor to the manipulator arm, which serves to separate and reassemble the shroud nozzle.

However, there are various disadvantages in such technologies. The method of measuring the change in electromagnetic field has a disadvantage in that it is weak to heat and there is frequent breakdown because the sensor is inserted into the nozzle. The vibration sensing method using the mounted type acceleration sensor has a disadvantage in that measurement accuracy is compromised since vibration attenuated through the manipulator is measured.

Furthermore, according to circumstances, the shroud nozzle arranged between the ladle and the tundish may have a defect, such as cracks or breakages due to the poor verticality, and such defect may cause additional damages of the nozzle due to deterioration in the quality of the cast slab and concentration of partial impact of molten steel.

In order to solve the disadvantages, the inventor of the present invention has developed a contactless vibration measuring system utilizing laser vibration measuring technology. The present analyzing system diagnoses state analysis and check of steelmaking-continuous casting equipment, state analysis of an immersion nozzle, twisting in verticality of the shroud nozzle or the immersion nozzle, slag inflow time of the shroud nozzle, and whether or not there is any crack in the shroud nozzle in real time, and then, provides a worker with information that the worker can monitor the continuous casting state by wire or wirelessly.

Additionally, not only the shroud nozzle but also the immersion nozzle may have various defects. According to circumstances, there may be nozzle blockage that the inner diameter of the immersion nozzle through which molten steel passes is reduced by slag flow into the ladle, and oxides formed when deoxidizing fillers mixed in the molten steel or refractories of the shroud nozzle are reacted with the molten steel. In case of the blockage of the immersion nozzle, height of the molten steel becomes unstable due to an irregular flow of the molten steel, and a change of the mold level has a bad influence on the quality of continuous cast products. In addition, blockage of the immersion nozzle causes generation of deflected airflow, and it may make cleanliness of the molten steel bad since mold flux flows into the molten steel.

Moreover, if some of blockage materials (fillers or oxides) attached on the inner wall of the immersion nozzle are exfoliated, some of the exfoliated parts are mixed into the molten steel and it makes cleanliness of the molten steel bad. If blockage of the immersion nozzle is severe, the casting process may be stopped.

In order to sense the defects of the shroud nozzle or the immersion nozzle in the steelmaking-continuous casting equipment, there are two methods: one being a sensing method through an open rate of a sliding gate during the continuous casting process and a sensing method through vibration obtained by the touch feeling of hands when the worker puts a steel bar onto the wall surface of the nozzle.

However, the method of sensing the blockage level of the nozzle according to the open rate of the sliding gate has a disadvantage in that it is difficult to sense blockage of the immersion nozzle in fact till about 50% or more of the inside of the nozzle is blocked. Furthermore, the method of sensing vibration by the touch feeling of hands when the worker puts a steel bar onto the wall surface of the nozzle has a limit that there is a deviation between workers, it is inaccurate, and it is difficult to measure online in real time.

In order to solve the problems, Korean Patent laid-open no. 10-2009-0071221 discloses "method and device for predicting blockage of immersion nozzle" to analyze the state of an immersion nozzle through measurement of frequency of the immersion nozzle. However, the method and device for predicting blockage of immersion nozzle has several problems in that utilization of DB is low since it provides just a simple prediction of the present state through a collected and analyzed DB, and in that applicability on the spot is low since it cannot provide users with real time information or alarm.

Besides the above, because the steelmaking-continuous casting process is very dangerous and difficult to access, even though it is very important that workers check and inspect the equipment or system for the process, the workers have difficulty in checking and inspecting the equipment or system. Furthermore, even when the shroud nozzle or the immersion nozzle has a defect or needs maintenance, it is difficult to access to the equipment or system to check the state and to maintain the equipment or system due to the working environment of high-temperature, high-heat and high-pressure.

### [Disclosure]

### [Technical Problem]

Accordingly, the present invention has been made in an effort to solve the above-mentioned problems occurring in the prior arts, and it is an object of the present invention to provide analysis system and method capable of making big data utilizing deep learning or data mining technology, analyzing and predicting through learning of artificial intelligence (AI), and real time alarm and display on the spot in order to measure and analyze frequencies of steelmaking-continuous casting equipment using laser and utilize collected and analyzed database (DB).

### [Technical Solution]

To achieve the above objects, the present invention provides a state analysis method of steelmaking-continuous casting equipment including the steps of: measuring vibration data of the steelmaking-continuous casting equipment by using a laser vibration measuring instrument; transferring the measured vibration data; comparing the received measured vibration data with the existing data and analyzing the vibration data; storing and learning the data; and displaying the compared and analyzed data, wherein the measured data determines abnormality in equipment or in a process through a case-specific correlation analysis or a predetermined defect diagnosis algorithm according to situational conditions and use states, an alarm or a control signal is transferred if necessary, the data is stored in a database (DB) and is stored and utilized as big data using data mining, machine learning, or deep learning technology, and the compared and analyzed data is displayed to a user so that the user can monitor and diagnose the state of the steelmaking-continuous casting equipment in real time.

Moreover, the step of storing and learning the data includes the steps of: making a database of real time vibration information; making a database of abnormality in the equipment; making a database of information on introduction of outdoor air, bad assembly of a nozzle, blockage of inner diameter, introduction of slag, generation of cracks, or separated states of large-sized fillers in case of a continuous casting nozzle; making a database of vibration information and correlation analysis information on the states; making a database of correlation analysis information between working conditions and states; and making a database of safe use standard information.

Furthermore, the step of displaying the compared and analyzed data includes a step of: displaying the data to the user, and providing an alarm and replacement information for the user if not satisfying predetermined conditions.

Additionally, the data is utilized as big data in order to raise predictability of information and reliability of monitoring data through repeated learning by applying artificial intelligence technology.

In another aspect of the present invention, the present invention provides a system for control and state analysis of steelmaking-continuous casting equipment, including: a vibration measuring unit for continuously measuring the surface of the shroud nozzle; a data transferring unit for transferring the measured data; a data analysis unit for analyzing the measured data; a data storage unit for storing the measured and analyzed data or database; and a data output unit for outputting the measured and analyzed data, wherein the data analysis unit stores the measured data in a database through correlation analysis by cases or a predetermined defect diagnosis algorithm according to situational conditions and use states in order to judge abnormality of the equipment or the process, and transfers an alarm or a control signal if necessary, and wherein the data is stored in a database (DB), is stored and utilized as big data using data mining, machine learning or deep learning technology, and the compared and analyzed data is displayed to the user so that the user can monitor and diagnose the state of the steelmaking-continuous casting equipment in real time.

Moreover, the data analysis unit makes a database of real time vibration information of the equipment, makes a database of abnormality in the equipment, makes a database of information on introduction of outdoor air, bad assembly of a nozzle, blockage of inner diameter, introduction of slag, generation of cracks, or separated states of large-sized fillers in case of a continuous casting nozzle, makes a database of vibration information and correlation analysis information on the states, makes a database of correlation analysis information between working conditions and states, and makes a database of safe use standard.

Furthermore, the data output unit displays the data to the user, and provides an alarm and replacement information for the user if not satisfying predetermined conditions.

Additionally, the data is utilized as big data in order to raise predictability of information and reliability of monitoring data through repeated learning by applying artificial intelligence technology.

In addition, the vibration measuring unit continuously measures vibration data of the equipment using a contactless means, uses a laser vibration sensor, and includes dustproof and heatproof means.

Moreover, the step of storing and learning the data includes the steps of: making a database of real time vibration information; making a database of abnormality in the equipment; making a database of information on introduction of outdoor air, bad assembly of a nozzle, blockage of inner diameter, introduction of slag, generation of cracks, or separated states of large-sized fillers in case of a continuous casting nozzle; making a database of vibration information and correlation analysis information on the states; making a database of correlation analysis information between working conditions and states; and making a database of safe use standard information.

Furthermore, the predicted information is transferred by wire or wirelessly.

Additionally, a control signal or information is transferred in connection with a flow rate control device and the steelmaking-continuous casting equipment, an automatic adjustment signal of a nozzle position is transferred when abnormality in assembly of the nozzle is sensed in case of a continuous casting nozzle, a warning signal of the corresponding time information is transferred when separation of the large-sized fillers is sensed, a control signal or a replacement signal is transferred to the flow rate control device if slag sink vortex or slag introduction is sensed or blockage of the inner diameter is beyond a predetermined numerical value.

In addition, the data analysis unit makes a database of real time vibration information of the equipment, makes a database of abnormality in the equipment, makes a database of information on introduction of outdoor air, bad assembly of a nozzle, blockage of inner diameter, introduction of slag, generation of cracks, or separated states of large-sized fillers in case of a continuous casting nozzle, makes a database of correlation analysis information between working conditions and states, and makes a database of safe use standard.

Moreover, the monitoring information calculated through the analysis unit is transferred by wire or wirelessly, or using IoT environment.

Furthermore, the system further includes a measurement position fixing function by a digital image processing of a camera.

Additionally, a control signal or information is transferred in connection with a flow rate control device and the steelmaking-continuous casting equipment, an automatic adjustment signal of a nozzle position is transferred when abnormality in assembly of the nozzle is sensed in case of a continuous casting nozzle, a warning signal of the corresponding time information is transferred when separation of the large-sized fillers is sensed, a control signal or a replacement signal is transferred to the flow rate control device if slag sink vortex or slag introduction is sensed or blockage of the inner diameter is beyond a predetermined numerical value.

Moreover, the vibration measuring unit continuously measures vibration data of the steelmaking-continuous casting equipment using a contactless means, uses a laser vibration measuring instrument, and diagnoses an abnormal state of the process using data mining, diagnoses states, such as introduction of outdoor air, bad assembly of a nozzle, blockage of inner diameter, introduction of slag, generation of cracks, or separation of large-sized fillers in case of a continuous casting nozzle, and transfers a control signal to peripheral devices based on the diagnosis contents in order to improve the quality of a cast slab through an effective steelmaking-continuous casting process control and to raise a molten steel yielding percentage.

Furthermore, the steelmaking-continuous casting equipment is a shroud nozzle or an immersion nozzle.

### [Advantageous Effects]

The state analysis system and method of the steelmaking-continuous casting equipment according to the present invention can measure and analyze frequencies of an object using a laser vibration measuring instrument, utilize analyzed database (DB) utilizing deep learning or machine learning technology, predict, for instance, defect, twisting and cracks of the nozzle, mixing of outdoor air, and inflow of slag, and provide real time alarm and display on the spot.

### [Description of Drawings]

FIG. 1 is a schematic diagram of a continuous casting device according to the present invention.
FIG. 2 is an explanation drawing for diagnosing the state of a shroud nozzle, which is one of steelmaking-continuous casting equipment according to the present invention.
FIG. 3 is a sectional view showing a normal state of the shroud nozzle according to the present invention.
FIG. 4 is a sectional view showing a state where the shroud nozzle according to the present invention has a defect.
FIG. 5 is an explanation drawing on vibration factor analysis of the shroud nozzle according to the present invention.
FIG. 6 is a graph showing vibration measurement of the shroud nozzle in a normal state of FIG. 3.
FIG. 7 is a graph showing vibration measurement of the shroud nozzle in a state where the nozzle has a defect shown in FIG. 4.
FIG. 8 is a block diagram of a state analysis system of the shroud nozzle according to the present invention.
FIG. 9 is a flow chart of a state analysis method of the shroud nozzle according to a first embodiment of the present invention.
FIG. 10 is a flow chart of a state analysis method of the shroud nozzle according to a second embodiment of the present invention.

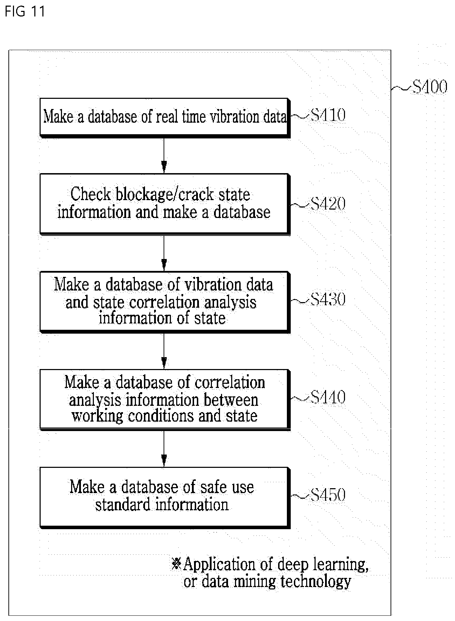

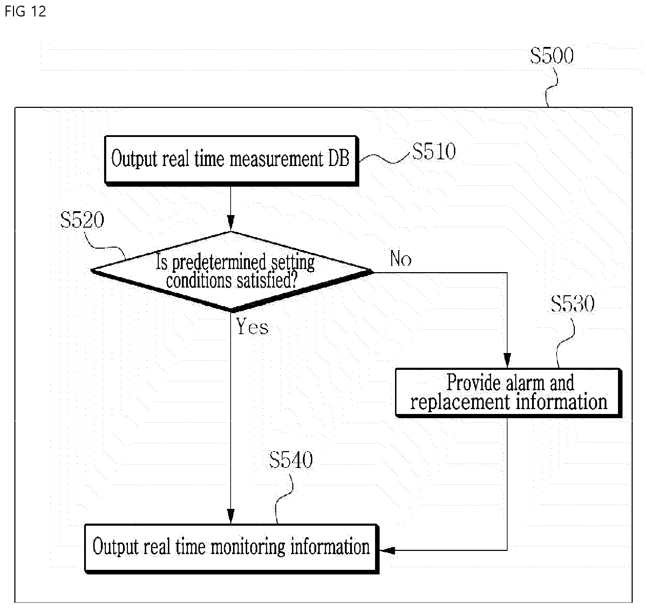

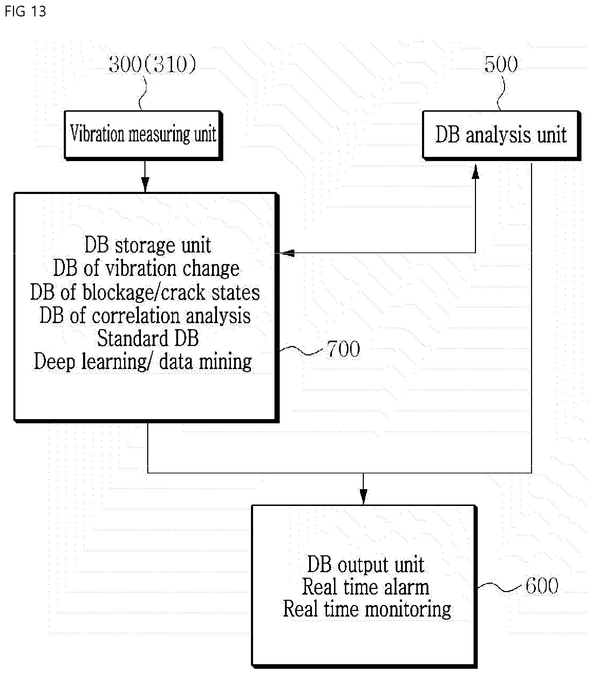

FIGS. 11 to 13 are partially detailed views of the state analysis method of the nozzle according to the present invention.

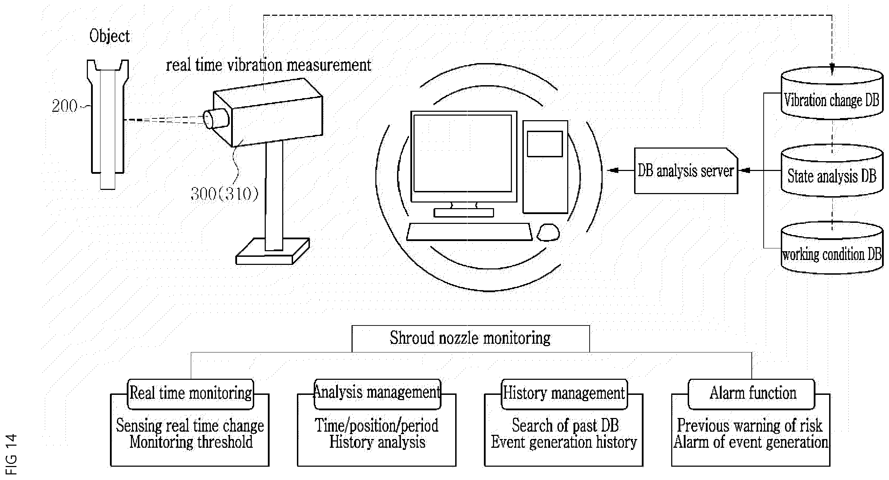

FIG. 14 is an explanatory view of the state analysis method of the shroud nozzle according to the present invention.
FIGS. 15 and 16 are a test scene photograph and a display-related photograph of the state analysis system and method according to the present invention.
FIGS. 17 and 18 are graphs of vibration measurement results of a normal state and an abnormal state according to tests.
FIGS. 19 and 20 are inside photographs of the shroud nozzle in the normal state and in the abnormal state according to the present invention.
FIGS. 21 and 22 are graphs of vibration measurement results of the normal state and the abnormal state.
FIGS. 23 and 24 are reference views showing peripheral relations of the shroud nozzle according to the present invention.
FIG. 25 is an explanatory view of a shroud nozzle manipulator applied to the present invention.
FIG. 26 is an explanatory view showing a state to diagnose a state of an immersion nozzle, which is another one of the steelmaking-continuous casting equipment according to the present invention.
FIG. 27 is an explanatory view of a structure of a system for measuring the state of the immersion nozzle according to the present invention.

### [Mode for Invention]

Hereinafter, system and method for control and state analysis of steelmaking-continuous casting equipment according to the embodiments of the present disclosure will be described in detail with reference to accompanying drawings so that the embodiments may be easily implemented by those skilled in the art. However, the present disclosure may be implemented in various ways without being limited to the embodiments. In addition, in the drawings, well-known elements or components may be omitted to avoid unnecessarily obscuring the presented embodiments, and like reference numerals denote like or similar elements throughout the specification.

In the whole specification of the present invention, molten metal' means a liquid state of metal molten during casting work. Since molten metal' means a molten state of metal, the molten metal is coagulated after being cooled, and then, is changed into a metal cast slab. In this instance, the metal cast slab may be a slab, a bloom or a billet. In detail, in steel casting, molten metal may be molten steel.

Moreover, in the whole specification of the present invention, data and a database meaning information values may be utilized in the same meaning depending on situations, and if a new meaning is generated through accumulation and storage of data, the existing data may be a database.

The steelmaking-continuous casting equipment and system to measure vibration and analyze states using laser according to the present invention are not limited as the following device or equipment, but may be devices, equipment, or systems in all processes, and preferably, are a shroud nozzle and an immersion nozzle.

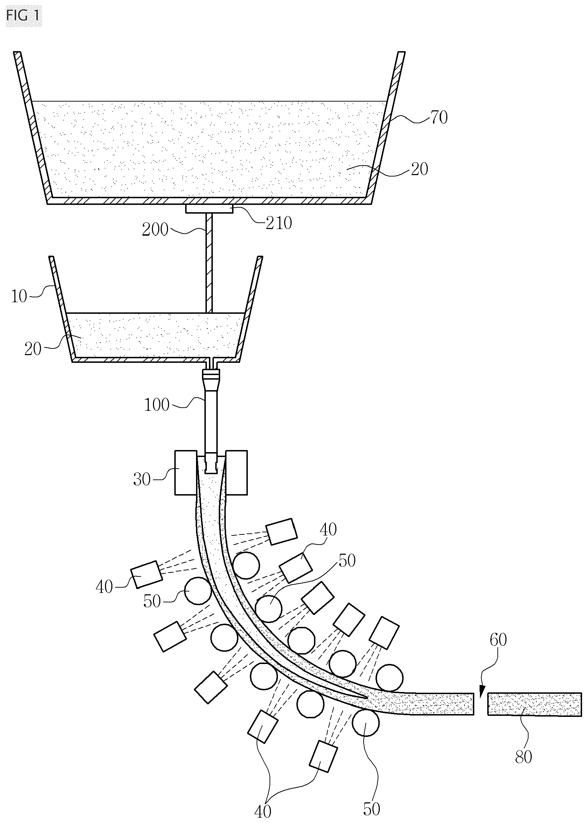

FIG. 1 is a schematic diagram of a continuous casting device according to the present invention. As shown in the drawing, molten metal 20 in a ladle 70 moves into a tundish 10 through a shroud nozzle 200, and an immersion nozzle 100 is connected to a tundish 10 receiving the molten metal from the ladle 70 and the bottom surface of the tundish 10 and the is inserted into a mold 30 limiting the shape of the cast slab.

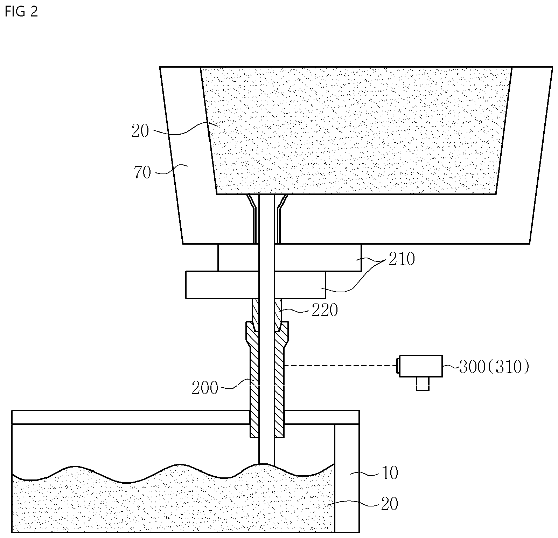

FIG. 2 is an explanation drawing for diagnosing the state of a shroud nozzle, which is one of steelmaking-continuous casting equipment according to the present invention. As shown in the drawing, the shroud nozzle 200 includes a collector nozzle 220 and an SN plate 210 disposed at an upper portion thereof, and is connected with the ladle 70. A vibration measuring units 300 or 310 for observing and sensing vibration of the shroud nozzle 200 is disposed to be spaced apart from the shroud nozzle 200.

The molten metal 20 moves to the tundish 10 through the shroud nozzle 200 in the ladle 70. However, if verticality of the shroud nozzle 200 is irregular or unbalanced or the nozzle has cracks or breakages, outdoor air may be introduced through cracks. So, lots of problems, such as reduction of reoxidation of molten steel, abnormal cleanliness of steel, and introduction of slag into the ladle 70, may be repeated.

Furthermore, the molten metal 20 is injected into the mold 30 from the tundish 10 through the immersion nozzle 100, and passes an initial coagulation process while forming a coagulated layer. The coagulated layer getting out of the mold 30 is cooled by a cooling unit, for instance, a cooling medium sprayed through a spray nozzle, and becomes a metal cast slab in the form of a slab, a bloom or a billet.

The metal cast slab moves to the next step by a guide roller. Additionally, the cast slab moved from a cutting point may be cut by length and size. The movement and the initial coagulation process of the molten metal 20 introduced into the mold 30 are important factors to determine the property and quality of the metal cast slab finished in continuous casting. Therefore, the present invention is to sense, analyze and measure defects of the shroud nozzle 200 and to improve the quality of the molten metal and the cast slab by preventing or coping with the defects.

As described above, because the quality of the cast slab may be reduced by the defects or abnormality of the shroud nozzle 200, it is necessary to rapidly and continuously sense, analyze and cope with states of the shroud nozzle 200 and inform a user of the states of the shroud nozzle 200.

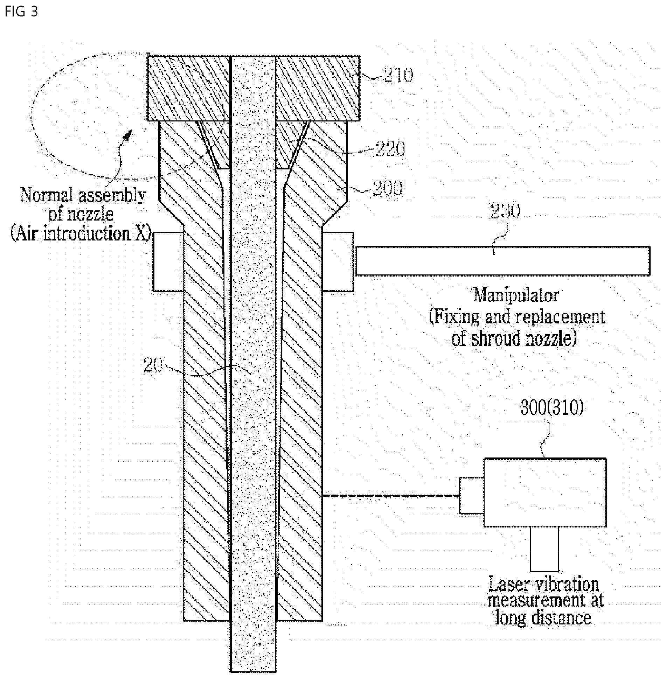

FIG. 3 is an enlarged sectional view showing a normal state of the shroud nozzle according to the present invention. As shown in the drawing, a contactless vibration measuring unit 300 measures vibration data of the shroud nozzle 200 at a long distance. Additionally, the SN plate 210, the collector nozzle 220 and the shroud nozzle 200 are connected normally so that outdoor air is not introduced.

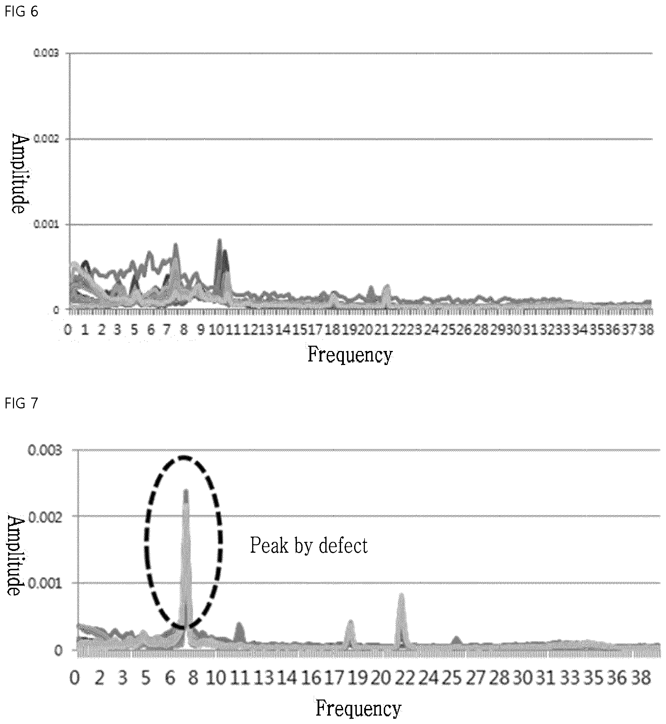

FIG. 6 is a graph of a result data that vibration of the shroud nozzle 200 in the normal state is measured. If there is no defect, there is no vibration with specifically high amplitude and amplitude of vibration is in an even condition.

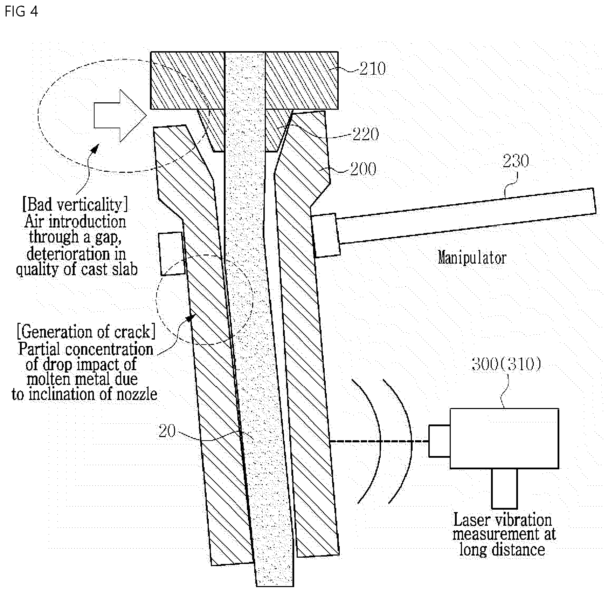

FIG. 4 is an enlarged sectional view showing of the shroud nozzle 200 in an abnormal state, namely, in a state where there is a defect or abnormality. As shown in the drawing, the contactless vibration measuring unit 300 measures vibration data of the shroud nozzle 200 at a long distance. In addition, the SN plate 210, the collector nozzle 220 and the shroud nozzle 200 are connected abnormally so that outdoor air is introduced.

As described above, if verticality of the shroud nozzle 200 is bad, outdoor air is introduced and the quality of the cast slab is deteriorated, and according to circumstances, the shroud nozzle 200 may have cracks. In the abnormal state, when the molten metal 20 is introduced, the shroud nozzle 200 generates abnormal vibration data.

FIG. 7 illustrates a graph of result data that vibration of the shroud nozzle 200 in the abnormal state is measured. If there is a defect, vibration with high amplitude is generated, and as shown in the drawing, vibration with very high amplitude in frequencies of 6 to 8 Hz may be generated. As described above, abnormality and state information of the nozzle can be checked or predicted in real time using the vibration data of the shroud nozzle 200.

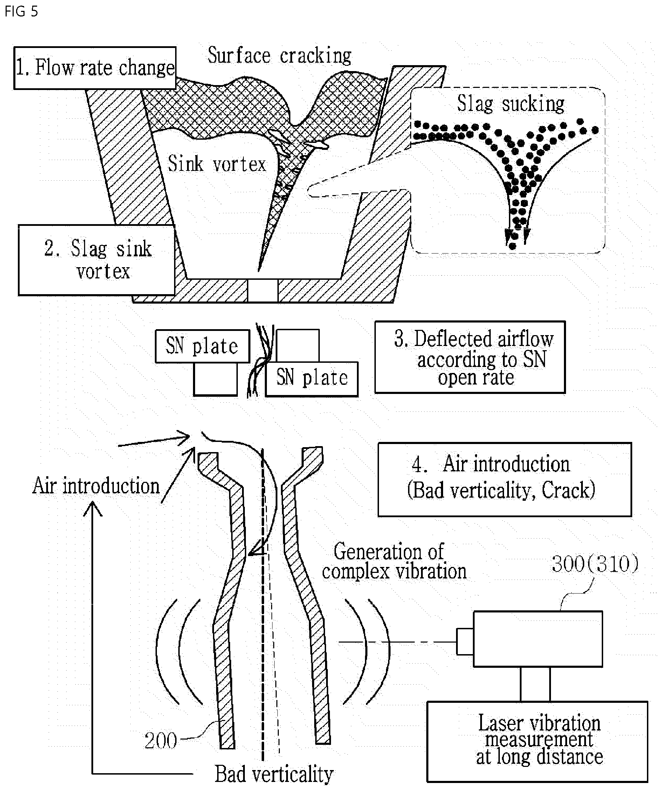

FIG. 5 is an explanation drawing on vibration factor analysis of the shroud nozzle 200 in order to synthetically sense, analyze and judge various factors, such as a flux change of the molten metal in the ladle 70, precipitation or rotation and movement information of slag, deflected airflow according to the open rate of the SN plate 210, introduction of outdoor air through connected parts.

Since the vibration data changing by such various factors may be measured, an algorithm to which weighted values or variables by factors are applied must be applied to the vibration data obtained at the time of data analysis, and the obtained data may be processed and utilized as a reference value.

The algorithm is a data-based defect diagnosis algorithm obtained by analyzing the measured vibration data. In this instance, correlation analysis and standard of nozzle defect judgment may be prepared in connection with the vibration change data, defect check data of the shroud nozzle after using, and operation conditions.

As shown in FIG. 2, the state analysis system and method of the shroud nozzle according to the present invention are to measure vibration of the shroud nozzle 200, compare and analyze the measured data, store the data in a database, and inform the user of the data and output the data so that the user can monitor the state of the steelmaking-continuous casting equipment in real time and can predict the state of the shroud nozzle 200 if necessary.

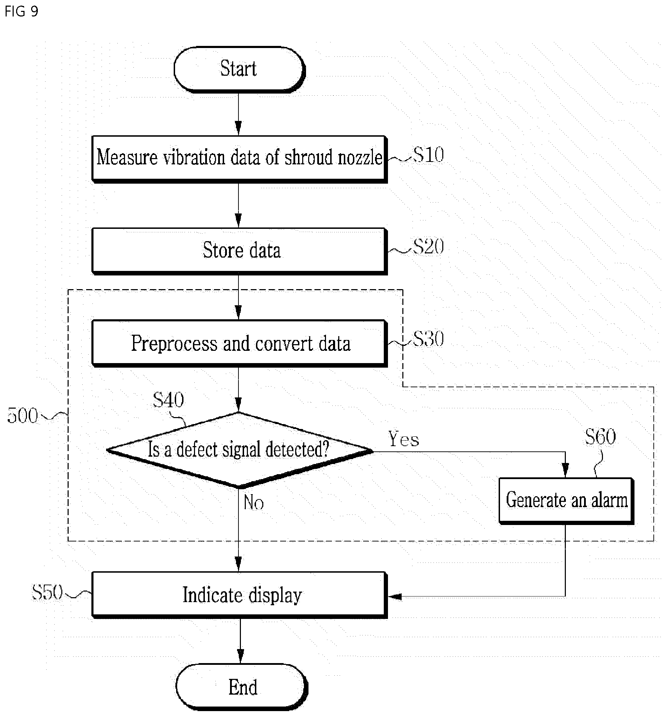

As shown in FIG. 9, the state analysis method of the shroud nozzle according to the present invention includes the steps of: measuring vibration data of the surface of the shroud nozzle (S10); storing the measured vibration data (S20); comparing and analyzing the measured vibration data with the existing data or preprocessing and converting the measured vibration data (S30); determining whether or not there is any defect (S40); displaying data (S50); and informing of the data (S60).

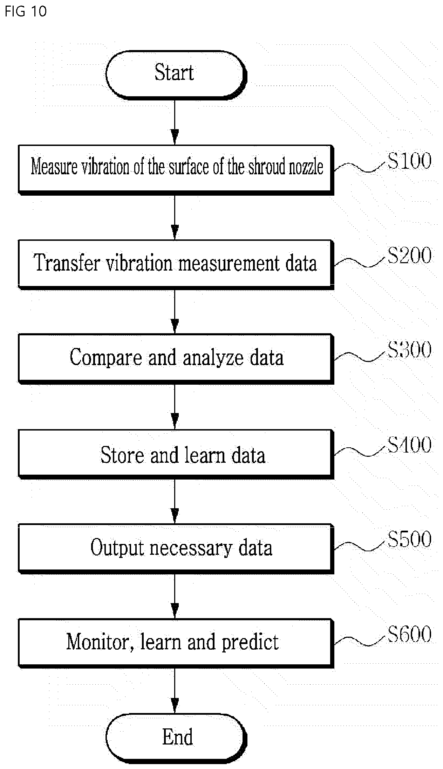

FIG. 10 is a flow chart of a state analysis method of the shroud nozzle according to a second embodiment of the present invention. The state analysis method of the shroud nozzle according to the second embodiment of the present invention includes the steps of: measuring vibration data of the surface of the shroud nozzle (S100); transferring vibration measurement data (S200); comparing and analyzing the data (S300); storing and learning the data (S400); outputting necessary data (S500); and monitoring, learning and predicting data (S600).

The step (S400) of storing and learning the data includes the steps of: making a database of real time vibration information (S410); making a database of defect state information (S420); making a database of vibration information and state correlation analysis information (S430); making a database of correlation analysis information between working conditions and state (S440); and making a database of safe use standard information (S450).

That is, the state analysis method is capable of analyzing and data-mining used states of the shroud nozzle 200 by cases, and can proceed to make the DB of vibration changes of the shroud nozzle in real time (continuously), to check the defect state of the shroud nozzle after use and make the DB of the defect state, to analyze correlation between the state after use of the shroud nozzle and vibration generated during use of the shroud nozzle, to analyze correlation between the state after use of the shroud nozzle and working conditions (temperature, casting speed and ingredients of molten steel), and to make the DB for setting a safe use standard range in connection with defect generation of the shroud nozzle through comparison and analysis correlation among the vibration measurement value of the shroud nozzle, the state after use of the shroud nozzle, and working conditions.

The step (S500) of displaying the comparison and analysis data includes the step (S530) of displaying the data to the user and providing an alarm and replacement information for the user if not satisfying the predetermined conditions.

That is, the system can output the vibration measurement data of the shroud nozzle in real time and display it visually, and provide an alarm and information to inform of that use of the shroud nozzle is dangerous and it is necessary to replace the shroud nozzle if data beyond the predetermined safe use range is measured (the system can sense a change in vibration measurement data and a defect level in the shroud nozzle and grasp the level in real time in advance). The alarm means may be one of all visual and auditory means.

Moreover, the vibration measuring unit continuously measures vibration data of the shroud nozzle using the contactless means, namely, a laser vibration measuring instrument, diagnoses bad nozzle connection, introduction of slag into the ladle, and generation of cracks using data mining, and transfers a control signal to peripheral devices based on the diagnosis contents in order to raise a molten steel yielding percentage through an effective gate blockage.

Furthermore, the measured data may be made into a database (DB) through analysis of correlation by cases according to situation conditions and use states, and can be stored and utilized into big data using data mining, deep learning or machine learning technology.

The data mining to be applied to the state analysis method according to the present invention means a process to find knowledge, in which the user is interested, by any method, for instance, sequential patterns or similarity, in the database or a process to find useful information in high-capacity data, and also means technology to find not only expected information but also unexpected information.

When correlation of information is grasped through data mining, valuable information can be created and applied to decision-making so as to maximize profits. For instance, hidden knowledge, unexpected tendencies or new rules may be found on the basis of all usable original data including daily transaction data, customer data, product data or customer response data, and other external data, and they can be utilized as information for decision-making in actual business.

The representative application for data mining is database marketing. Therefore, the surface vibration data of the shroud nozzle according to the present invention can be utilized as a database through processing and classification, and the data mining is applied to the database.

The deep learning to be applied to the state analysis method of the shroud nozzle according to the present invention means machine learning technology constructed based on an artificial neural network (ANN) so that a computer can learn various kinds of data like a man by itself.

The deep learning is to teach computers, which are machines, to distinguish things by imitating the information processing method, which distinguishes things, after human brains find patterns in lots of data. As described above, when deep learning technology is applied, even though a person does not set all judgment standards, the computers can recognize, infer and judge by themselves.

Therefore, the deep learning technology is widely utilized in voice recognition, image recognition, photo analysis, and so on. Because a computer can arrange and analyze information on the state of the shroud nozzle and recognize, infer and judge by itself, the present invention provides use convenience since the user can predict the state of the shroud nozzle.

As described above, in case that the user can predict the state of the shroud nozzle and generation of defect, if necessary, delivery, management and preparation of stocks are possible. Therefore, the present invention can increase productivity and provide temporal and economical effects.

Additionally, because the compared and analyzed data is displayed to the user in real time, the user can monitor the state of the shroud nozzle in real time.

In this instance, the display method makes a direct alarm to the user or simultaneous judgment through a general control room possible, and if an alarm is directly transferred to the user, the alarm is offered through the user's mobile terminal, PDA, smart phone, or tablet PC.

As described above, because the alarm of the state information of the shroud nozzle to the user in real time is possible, the user can intuitionally grasp the present state of the shroud nozzle and can predict and cope with the state.

The data or the database can be utilized as big data. If AI technology is applied, it makes repeated learning possible, and can raise predictability of information, and IoT technology capable of sending and receiving data between components can be applied.

That is, when a superintendent of the site, the superintendent's mobile terminal (not shown), and the components of a workshop send and receive information with one another, it is more effective and rapid than the existing state analysis method of the shroud nozzle and it makes correct analysis and prediction possible.

The big data utilized according to the present invention is data created in digital environment, and is a large-scale data which is huge in scale and short in creation cycle and includes not only numerical data but also character data and image data.

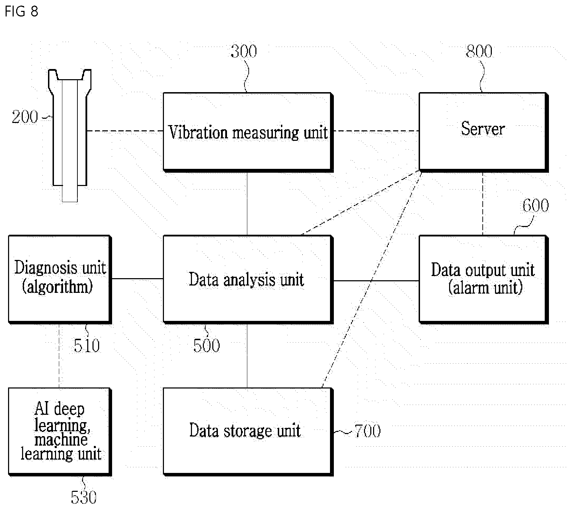

FIG. 8 is a block diagram of a configuration of the state analysis system of the shroud nozzle according to the present invention. The state analysis system of the shroud nozzle according to the present invention includes: a vibration measuring unit 300 for continuously measuring the surface of the shroud nozzle; a data transferring unit 400 for transferring the measured data; a data analysis unit 500 for analyzing the measured data; a data storage unit 700 for storing the measured and analyzed data or database; and a data output unit 600 for outputting the measured and analyzed data.

The data analysis unit 500 makes a database (DB) of the measured data through correlation analysis by cases according to situation conditions and use states, stores and utilizes the measured data into big data using data mining, machine learning or deep learning technology, and the compared and analyzed data is displayed to the user in real time so that the user can monitor the state of the shroud nozzle in real time.

Additionally, the data analysis unit 500 can make a DB of real time vibration information, a DB of defect states and defect generation time, and crack state information, a DB of correlation analysis information between vibration information and the state, a DB of correlation analysis information between working conditions and the states, and a DB of safe use standard information.

In addition, the step of storing and learning the data includes the steps of: making a DB of real time vibration information; making a DB of state information on twisting in nozzle assembly, introduction of outdoor air, generation of cracks, and introduction of slag; making a DB of vibration information and correlation analysis information of states; making a DB of correlation analysis information between working conditions and states; and making a DB of safe use standard information. Moreover, the predicted information can be transferred by wire or wirelessly.

Furthermore, the present invention may further include a step or a system of effectively establishing cast interception time by transferring a predicted diagnosis signal or information in connection with a ladle plate mechanism and the manipulator arm, transferring an automatic adjustment signal of a nozzle position if abnormality in nozzle assembly is sensed, and transferring a mechanism opening and closing signal if introduction of slag is sensed from the ladle.

Additionally, the data output unit 600 displays data to the user, and provides an alarm and replacement information for the user if not satisfying the predetermined conditions.

In addition, the data or the database can be utilized as big data. If AI technology is applied, it makes repeated learning possible, and can raise predictability of information, and IoT technology capable of sending and receiving data between components can be applied.

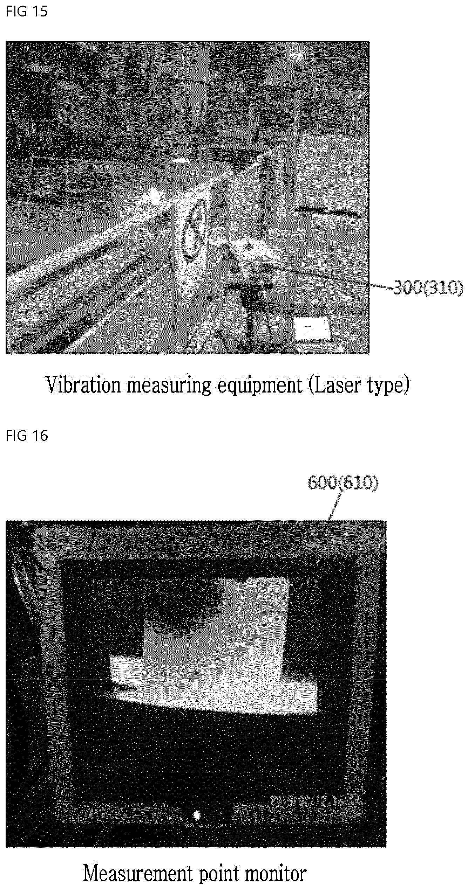

FIG. 15 shows a test process to check the state analysis method and system of the shroud nozzle according to the present invention. The vibration measuring unit 300 measured at a long distance, namely, more than 10 meter away from a test part using laser, and according to circumstances, can measure using infrared rays. The test was carried out on a real spot, and the vibration measuring unit 300 carried out measurement 7 m away from the shroud nozzle 200.

FIG. 16 is a screen to monitor a point of the shroud nozzle to be measured by the vibration measuring unit 300. Besides the laser vibration sensor, various devices and means, such as an infrared imaging system, temperature measuring means using a long distance, and others may be applied at the same time.

Moreover, in order to raise accuracy in measurement, besides the contactless sensor, an imaging system (not shown) may be further prepared, and information on the appearance state, position, and color changes of the shroud nozzle can be sensed and compared through the imaging system.

The vibration measuring unit 300 may include a dustproof and heatproof means. The dustproof means can use a housing, a case, a cover or a damper to prevent vibration by external factors of the vibration measuring unit 300, and the heatproof means may include a fan to cope with environment of high temperature acting near the shroud nozzle 200.

Furthermore, the vibration measuring unit 300 may include a measurement position tracking function by the dustproof means, the heatproof means, and image processing, and an auto-tracking function in order to measure the same position. That is, the measurement position is moved since the shroud nozzle moves by the opening and closing rate of a sliding gate valve during working. In order to prevent the movement of position, a motor is moves through image processing so as to automatically trace the measurement position according to movement of the nozzle.

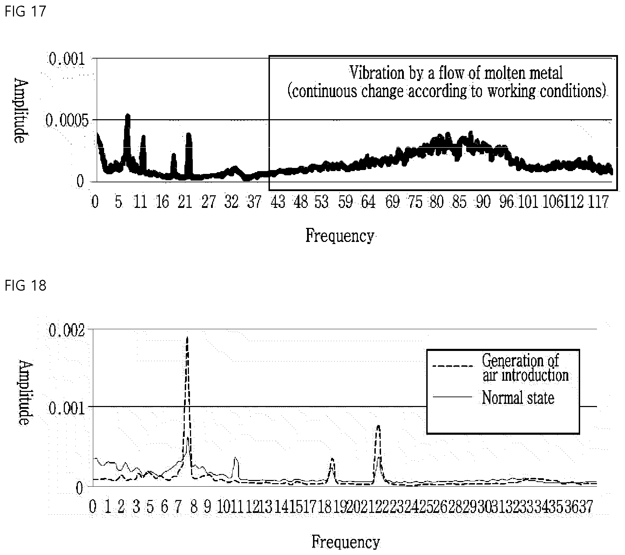

FIG. 17 illustrates a graph of vibration measurement results of the shroud nozzle in a normal state according to the test result. The graph shows results of vibration by a flow of molten metal and a change of vibration by working conditions and shows that vibration of high amplitude at a specific part is not sensed.

However, as shown in FIG. 18, the vibration measurement graph in an abnormal state shows that outdoor air is introduced into the shroud nozzle and vibration of a very high amplitude is generated at a specific part. As shown in the drawing, vibration of twice to four times as high as the normal state, which is 6 to 8 Hz, in amplitude was generated.

Additionally, if it is in the normal state, namely, there is no defect, amplitude in a zone of 0 to 38 Hz was within 0.001m , and if it is in the abnormal state, namely, there is a defect, vibration of high amplitude was observed in the zone of 0 to 38 Hz.

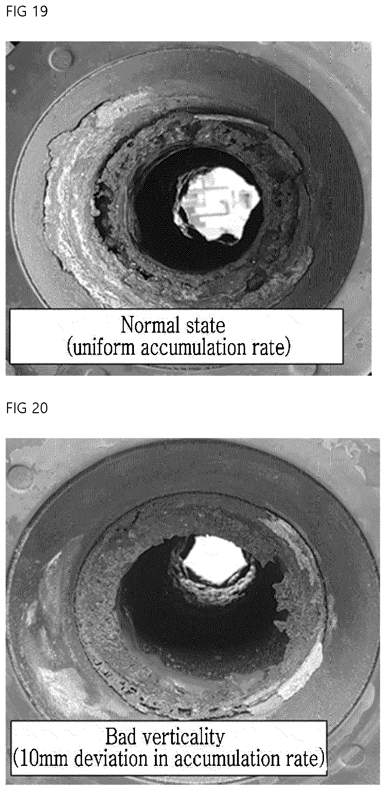

FIG. 19 is a photograph showing the inside of the nozzle in the normal state, and FIG. 20 is a photograph showing the inside of the nozzle in the abnormal state of bad verticality. As shown in the drawings, an accumulation rate of the inner surface of the nozzle is uniform in the normal state, but there was deviation of 10mm in accumulation rate in the abnormal state.

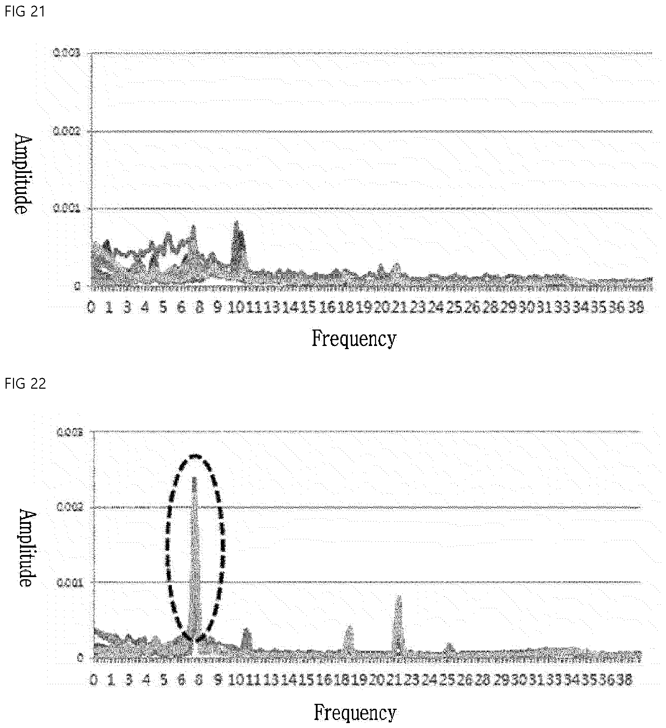

FIG. 21 is a graph on a vibration measurement result in the normal state according to FIG. 19, and FIG. 22 is a graph on a vibration measurement result in the abnormal state according to FIG. 20. As illustrated in the drawings, vibration of very high amplitude was generated at a specific part in the abnormal state.

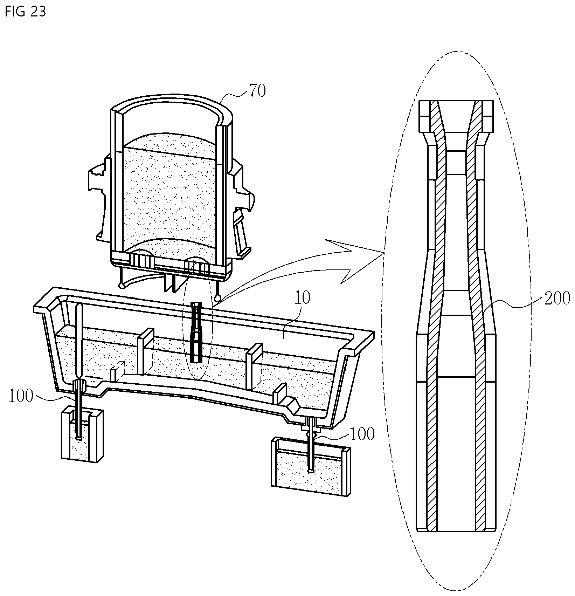

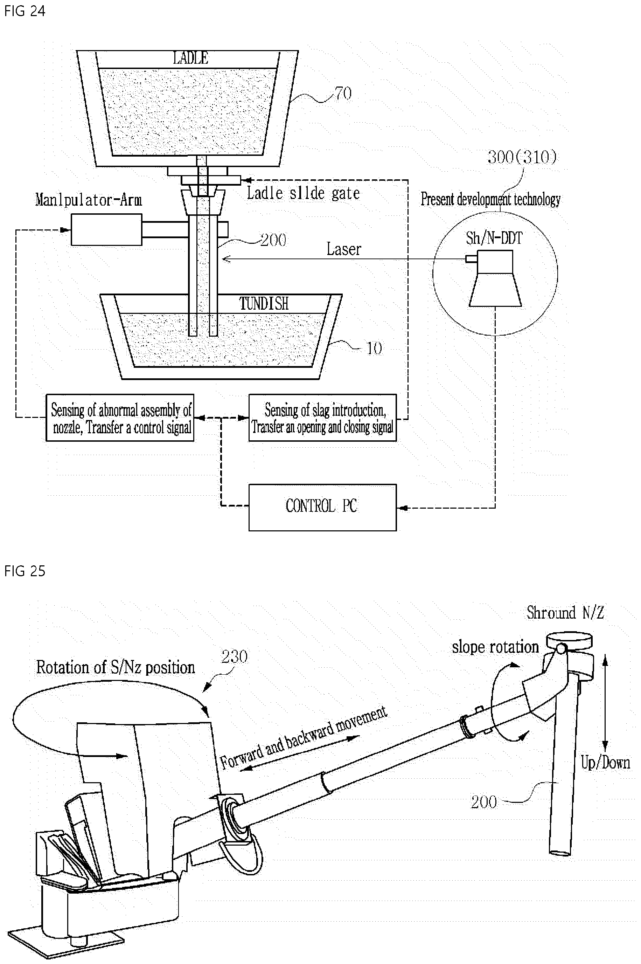

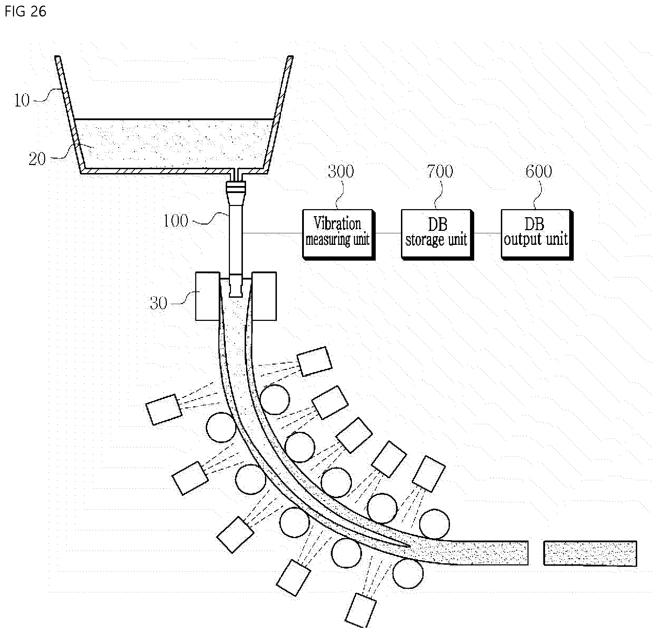

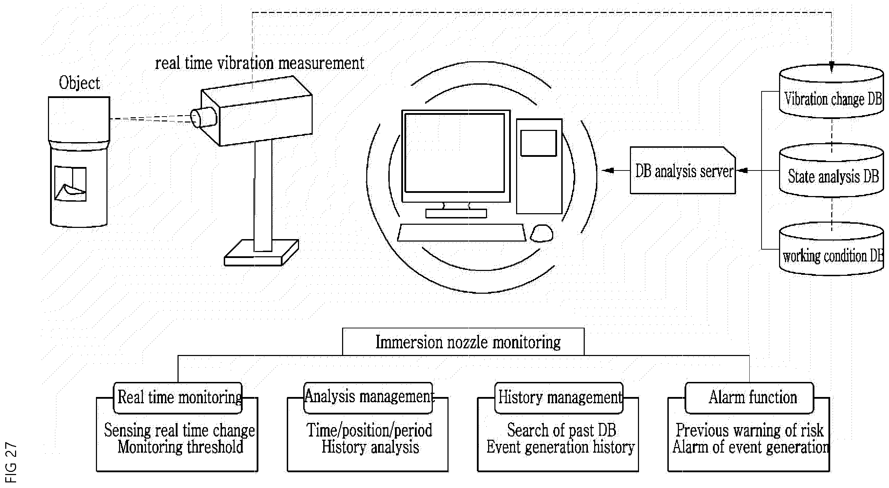

FIGS. 23 to 25 are explanatory views showing a configuration and a device for measuring vibration of the shroud nozzle according to the present invention, and FIGS. 26 and 27 are views showing a state analysis of an immersion nozzle, which is another one of the steelmaking-continuous casting equipment according to the present invention.

That is, the method for control and state analysis of the steelmaking-continuous casting equipment according to the present invention and the state analysis system can be used in all of the processes and facilities, and preferably, are applied to the shroud nozzle and the immersion nozzle so as to analyze and predict the states through laser vibration measurement.

For instance, the shroud nozzle and the immersion nozzle have similar purposes to guide a flow of the molten metal and prevent oxidation, but have different kinds of defects that can occur according to process order and environment. Therefore, the shroud nozzle and the immersion nozzle are different from each other in results of countermeasures, alarm, analysis and prediction.

Since it is an object of the present invention to measure and analyze states of all components of the steelmaking-continuous casting equipment and to utilize collected data, the present invention can be utilized to all processes uniformly, and may be applied to various fields and processes besides the steelmaking-continuous casting process.

As described above, while exemplary embodiments of the present invention have been disclosed for illustrative purposes, it will be appreciated that the present invention is not limited thereto, and those skilled in the art will appreciate that various modifications, additions and substitutions are possible, without departing from the scope and spirit of the invention.

### [Industrial Applicability]

The system and method for analyzing states of the steelmaking-continuous casting equipment according to the present invention can measure frequencies of the equipment, the shroud nozzle or the immersion nozzle and compare and analyze the measured data, prepare big data utilizing deep learning or data mining technology, and can be applicable to analyze and predict situations through artificial intelligence (AI) learning.

## Claims

1. A method for control and state analysis of steelmaking-continuous casting equipment, comprising the steps of:
measuring vibration data of the steelmaking-continuous casting equipment by using a laser vibration measuring instrument;
transferring the measured vibration data;
comparing the received measured vibration data with the existing data and analyzing the vibration data;
storing and learning the data; and
displaying the compared and analyzed data,
wherein the measured data determines abnormality in equipment or in a process through a case-specific correlation analysis or a predetermined defect diagnosis algorithm according to situational conditions and use states, an alarm or a control signal is transferred if necessary, the data is stored in a database (DB) and is stored and utilized as big data using data mining, machine learning, or deep learning technology, and the compared and analyzed data is displayed to a user so that the user can monitor and diagnose the state of the steelmaking-continuous casting equipment in real time.

2. The method according to claim 1, wherein the step of storing and learning the data includes the steps of: making a database of real time vibration information; making a database of abnormality in the equipment; making a database of information on introduction of outdoor air, bad assembly of a nozzle, blockage of inner diameter, introduction of slag, generation of cracks, or separated states of large-sized fillers in case of a continuous casting nozzle; making a database of vibration information and correlation analysis information on the states; making a database of correlation analysis information between working conditions and states; and making a database of safe use standard information.

3. The method according to claim 1, wherein the step of displaying the compared and analyzed data includes a step of: displaying the data to the user, and providing an alarm and replacement information for the user if not satisfying predetermined conditions.

4. The method according to claim 1, wherein the data is utilized as big data in order to raise predictability of information and reliability of monitoring data through repeated learning by applying artificial intelligence technology.

5. A system for control and state analysis of steelmaking-continuous casting equipment, comprising:
a vibration measuring unit for continuously measuring the surface of the shroud nozzle;
a data transferring unit for transferring the measured data;
a data analysis unit for analyzing the measured data;
a data storage unit for storing the measured and analyzed data or database; and
a data output unit for outputting the measured and analyzed data,
wherein the data analysis unit stores the measured data in a database through correlation analysis by cases or a predetermined defect diagnosis algorithm according to situational conditions and use states in order to judge abnormality of the equipment or the process, and transfers an alarm or a control signal if necessary, and
wherein the data is stored in a database (DB), is stored and utilized as big data using data mining, machine learning or deep learning technology, and the compared and analyzed data is displayed to the user so that the user can monitor and diagnose the state of the steelmaking-continuous casting equipment in real time.

6. The system according to claim 5, wherein the data analysis unit makes a database of real time vibration information of the equipment, makes a database of abnormality in the equipment, makes a database of information on introduction of outdoor air, bad assembly of a nozzle, blockage of inner diameter, introduction of slag, generation of cracks, or separated states of large-sized fillers in case of a continuous casting nozzle, makes a database of vibration information and correlation analysis information on the states, makes a database of correlation analysis information between working conditions and states, and makes a database of safe use standard.

7. The system according to claim 5, wherein the data output unit displays the data to the user, and provides an alarm and replacement information for the user if not satisfying predetermined conditions.

8. The system according to claim 5, wherein the data is utilized as big data in order to raise predictability of information and reliability of monitoring data through repeated learning by applying artificial intelligence technology.

9. The system according to claim 5, wherein the vibration measuring unit continuously measures vibration data of the equipment using a contactless means, uses a laser vibration sensor, and includes dustproof and heatproof means.

10. The method according to claim 1, wherein the step of storing and learning the data includes the steps of: making a database of real time vibration information; making a database of abnormality in the equipment; making a database of information on introduction of outdoor air, bad assembly of a nozzle, blockage of inner diameter, introduction of slag, generation of cracks, or separated states of large-sized fillers in case of a continuous casting nozzle; making a database of vibration information and correlation analysis information on the states; making a database of correlation analysis information between working conditions and states; and making a database of safe use standard information.

11. The method according to claim 4, wherein the predicted information is transferred by wire or wirelessly.

12. The method according to claim 4, wherein a control signal or information is transferred in connection with a flow rate control device and the steelmaking-continuous casting equipment, an automatic adjustment signal of a nozzle position is transferred when abnormality in assembly of the nozzle is sensed in case of a continuous casting nozzle, a warning signal of the corresponding time information is transferred when separation of the large-sized fillers is sensed, a control signal or a replacement signal is transferred to the flow rate control device if slag sink vortex or slag introduction is sensed or blockage of the inner diameter is beyond a predetermined numerical value.

13. The system according to claim 5, wherein the data analysis unit makes a database of real time vibration information of the equipment, makes a database of abnormality in the equipment, makes a database of information on introduction of outdoor air, bad assembly of a nozzle, blockage of inner diameter, introduction of slag, generation of cracks, or separated states of large-sized fillers in case of a continuous casting nozzle, makes a database of correlation analysis information between working conditions and states, and makes a database of safe use standard.

14. The system according to claim 8, wherein the monitoring information calculated through the analysis unit is transferred by wire or wirelessly, or using IoT environment.

15. The system according to claim 9, further comprising a measurement position fixing function by a digital image processing of a camera.

16. The system according to claim 8, wherein a control signal or information is transferred in connection with a flow rate control device and the steelmaking-continuous casting equipment, an automatic adjustment signal of a nozzle position is transferred when abnormality in assembly of the nozzle is sensed in case of a continuous casting nozzle, a warning signal of the corresponding time information is transferred when separation of the large-sized fillers is sensed, a control signal or a replacement signal is transferred to the flow rate control device if slag sink vortex or slag introduction is sensed or blockage of the inner diameter is beyond a predetermined numerical value.

17. The system according to claim 8, wherein the vibration measuring unit continuously measures vibration data of the steelmaking-continuous casting equipment using a contactless means, uses a laser vibration measuring instrument, and diagnoses an abnormal state of the process using data mining, diagnoses states, such as introduction of outdoor air, bad assembly of a nozzle, blockage of inner diameter, introduction of slag, generation of cracks, or separation of large-sized fillers in case of a continuous casting nozzle, and transfers a control signal to peripheral devices based on the diagnosis contents in order to improve the quality of a cast slab through an effective steelmaking-continuous casting process control and to raise a molten steel yielding percentage.

18. The method according to any one among claims 1 to 4, wherein the steelmaking-continuous casting equipment is a shroud nozzle or an immersion nozzle.

19. The system according to any one among claims 5 to 9, wherein the steelmaking-continuous casting equipment is a shroud nozzle or an immersion nozzle.
